# EUROPEAN PATENT SPECIFICATION

(11) **EP 3 639 957 B1**
(45) Date of publication and mention of the grant of the patent: **27.07.2022**
(21) Application number: 19203685.3
(22) Date of filing: 16.10.2019
(51) Int. Cl.: B23D 47/04, B27B 31/08, B27B 5/065, B23D 47/02

(54) **CUTTING MACHINE TO CUT PANELS MADE OF WOOD OR THE LIKE**
MASCHINE ZUM AUFTEILEN VON PLATTEN AUS HOLZ ODER DERGLEICHEN
MACHINE POUR DÉCOUPER DES PANNEAUX EN BOIS OU ANALOGUE

(30) Priority: 16.10.2018 IT 201800009492
(43) Date of publication of application: 22.04.2020
(73) Proprietor: BIESSE S.p.A., 61122 Pesaro (IT)
(72) Inventor: ANDREANI, Lorenzo, 61012 GRADARA (PU) (IT); CAMPANA, Marco, 61121 PESARO (PU) (IT); SALVIA, Massimo Paolo, 61122 PESARO (PU) (IT); SANTOLINI, Fernando, 61121 PESARO (PU) (IT)
(74) Representative: Manconi, Stefano

(56) References cited:
- EP-A1- 2 832 507

## Description

### CROSS-REFERENCE TO RELATED APPLICATIONS

This Patent Application claims priority from Italian Patent Application No. 102018000009492 filed on October 16, 2018.

### TECHNICAL FIELD

The present invention relates to a cutting machine to cut panels made of wood or the like, as per the preamble of claim 1.

### BACKGROUND ART

In the wood panel processing field, it is known to provide a cutting machine comprising a support base defining a substantially horizontal support surface for at least one panel of wood or the like; a cutting station; a main pusher to advance at least one first panel in a first direction through the cutting station; a secondary pusher to advance at least one second panel in the first direction through the cutting station; and a cutting device mounted in the cutting station to move in a second direction and along a cutting surface perpendicular to the first direction so as to cut the panels.

The support base is provided with a discharge trapdoor, which is mounted downstream of the cutting surface to discharge the swarf generated by the cutting device below the support surface, and extends parallel to the cutting surface in the second direction.

The discharge trapdoor is movable between a raised closing position, in which the discharge trapdoor is coplanar to the support surface, and a lowered opening position, in which the discharge trapdoor disengages the support surface to allow the swarf to fall.

EP2832507 discloses a cutting machine as per the preamble of claim 1.

The known cutting machines of the type described above have some drawbacks mainly deriving from the fact that the cutting of the panels advanced through the cutting station from each of the above-mentioned main and secondary pushers can only be carried out when the discharge trapdoor is placed in its closing position.

In other words, the cutting device cannot cut the second panel when the discharge trapdoor is arranged in its opening position to discharge the first panel's swarf below the support surface and vice versa.

### DISCLOSURE OF INVENTION

The object of the present invention is to provide a cutting machine to cut panels made of wood or the like, which is without the above-described drawbacks and which is cheap and easy to implement.

According to the present invention, there is provided a cutting machine to cut panels made of wood or the like, as claimed in the appended claims.

### BRIEF DESCRIPTION OF THE DRAWINGS

The present invention will now be described with reference to the accompanying drawings, which illustrate a non-limiting embodiment thereof, wherein:
Figure 1 is a schematic perspective view, with parts removed for clarity, of a preferred embodiment of the cutting machine of the present invention;
Figure 2 is a schematic plan view, with parts removed for clarity, of the cutting machine in Figure 1;
Figure 3 is a schematic side view, with parts in section and parts removed for clarity, of the cutting machine in Figure 1;
Figures 4 and 5 are two schematic perspective views, on an enlarged scale and with parts removed for clarity, of a first detail of the cutting machine in Figure 1; and
Figures 6, 7 and 8 are three schematic perspective views, with parts removed for clarity, of a second detail of the cutting machine in Figure 1.

### BEST MODE FOR CARRYING OUT THE INVENTION

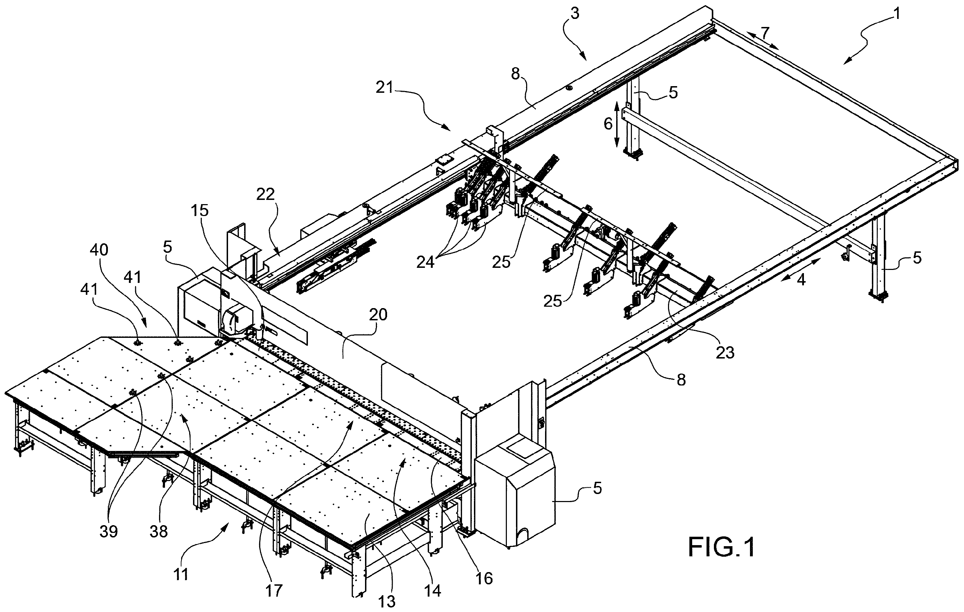

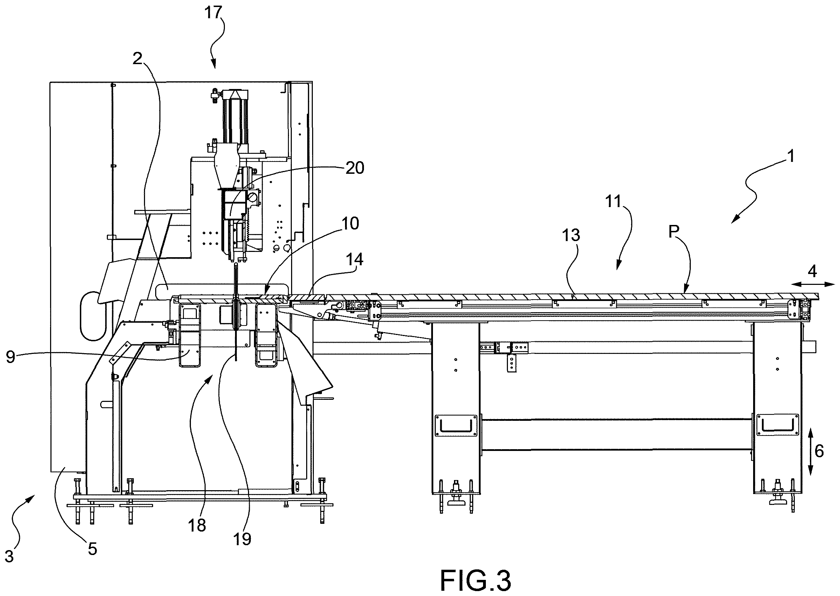

With reference to Figures 1, 2, and 3, the number 1 indicates, as a whole, a cutting machine to cut panels 2 made of wood or the like of a substantially rectangular shape.

The machine 1 comprises a gantry frame 3, which is substantially in the shape of a rectangular-based parallelepiped, extends in a horizontal direction 4, and is provided with four vertical edges, each defined by a respective upright 5 parallel to a vertical direction 6 transverse to the direction 4.

Each upright 5 is aligned with a corresponding upright 5 in the direction 4 and a corresponding upright 5 in a horizontal direction 7 orthogonal to directions 4 and 6.

The frame 3 also comprises two longitudinal guide members 8 parallel to each other, each extending in direction 4, and connecting two corresponding uprights 5; a crossbar 9, extending in direction 7, is limited by a flat upper face 10 perpendicular to direction 6, and connects two of the four uprights 5; and two support devices 11, which are arranged on opposite sides of the crossbar 9 in direction 4, and define, together with the face 10, a substantially horizontal support surface P for the panels 2.

The device 11 upstream of the crossbar 9 comprises a plurality of roller bars 12 parallel to each other and to direction 4, and the device 11 downstream of the crossbar 9 comprises an outlet table 13.

The frame 3 is also provided with a discharge trapdoor 14 mounted between the crossbar 9 and the table 13 to discharge the swarf generated by cutting the panels 2 below the surface P.

The trapdoor 14 comprises two support plates 15, 16, which are aligned with each other in direction 7, and are movable independently of each other, under the thrust of respective operating devices (not shown), between respective raised closing positions, wherein the plates 15, 16 are coplanar to the surface P, and respective lowered opening positions, wherein the plates 15, 16 allow the swarf to fall below the surface P.

The plate 15 has a length, as measured parallel to direction 7, less than the length of the plate 16, also as measured parallel to direction 7.

The machine 1 also comprises a cutting station 17, which is located at the crossbar 9 and its corresponding uprights 5, and is provided with a cutting assembly 18 of a known type coupled in a known way to the crossbar 9 to make, with respect to the frame 3 and under the thrust of an operating device known and not shown, straight movements in direction 7.

The cutting assembly 18 has a blade 19 and an engraver (not shown) mounted to rotate about respective rotation axes parallel to each other and to direction 4 and to make straight movements in direction 6 between respective lowered rest positions, wherein the blade 19 and the engraver (not shown) are arranged below the surface P to allow the advancement of the panels 2 along the surface P, and respective raised operating positions, wherein the blade 19 and the engraver (not shown) protrude through the crossbar 9 above the plane P itself to cut the panels 2.

The blade 19 and the engraver (not shown) are also moved by the assembly 18 along a cutting surface T obtained across the crossbar 9 perpendicularly to direction 4 with a reciprocating rectilinear motion comprising a forward stroke, wherein the engraver (not shown), arranged in front of the blade 19 in the advancement direction 7 of the assembly 18, performs the engraving of the panel 2 arranged on the surface P and the blade 19 cuts the panels 2, and a return stroke.

The assembly 18 cooperates with a known type of pressing device 20, which extends above the surface P in the direction 7, and is movable, with respect to the frame 3, in direction 6 between a raised rest position and a lowered operating position, wherein the panels 2 are blocked on the surface P to be cut by the assembly 18 parallel to direction 7.

The machine 1 also comprises a main pusher 21 and a secondary pusher 22 configured to advance panels 2 along the surface P and through the station 17 in both senses of direction 4.

The main pusher 21 comprises a motorised trolley 23, which is mounted above the above-mentioned roller bars 12, extends between the two members 8 in direction 7, and is movable along the members 8 in direction 4 under the thrust of a known and not shown operating device.

The trolley 23 supports a plurality of gripping members 24, which are distributed along the trolley 23 in direction 7, and are movable along the trolley 23 in direction 7 during a pusher 21 set-up step.

Each member 24 is also movable between a raised rest position and a lowered operating position, and has the shape of a gripper comprising a lower jaw and an upper jaw movable with respect to each other between a clamping position and a release position of at least one panel 2.

The pusher 21 is also provided with two thrust bars 25 mounted along the trolley 23 in direction 7.

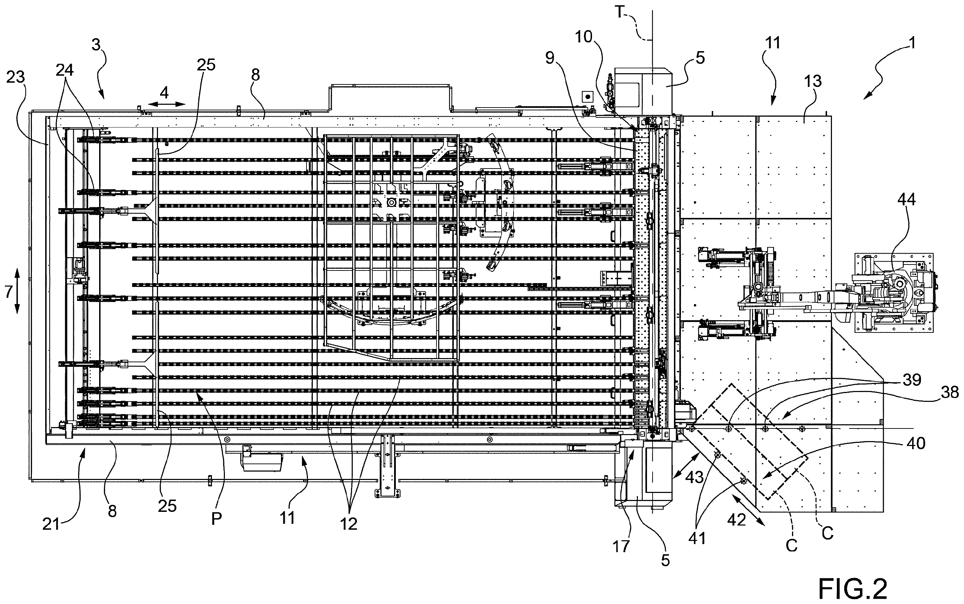

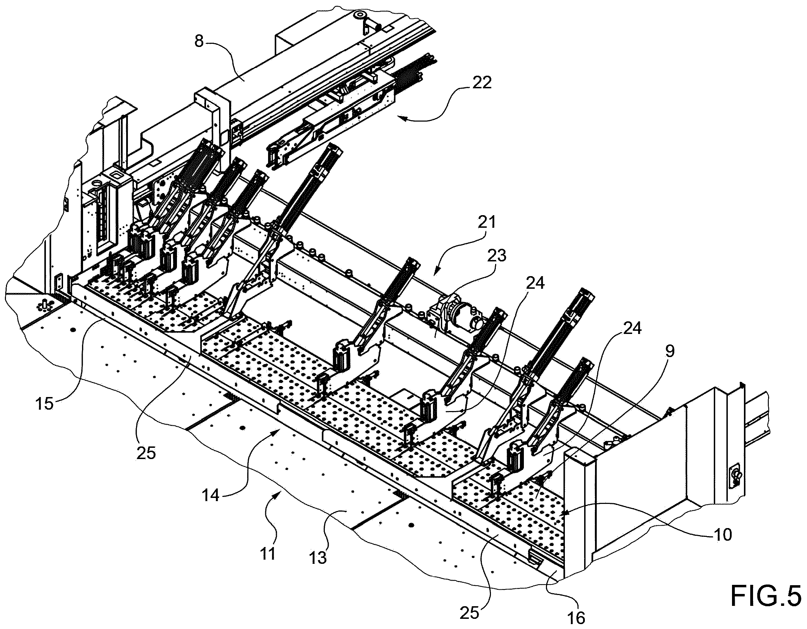

Each bar 25 is movable between a raised rest position (Figure 1), wherein the bar 25 is arranged above the members 24, and a lowered operating position (Figure 5), wherein the bar 25 is arranged in front of the members 24 in direction 4 to advance the components C (Figure 2), separated from the panels 2 by the blade 19, on the table 13 and/or to push the swarf in the trapdoor 14.

With regard to the above, it should be specified that the uprights 5 associated with station 17 laterally limit in direction 7 a working area of the pusher 21 and the trapdoor 14.

The secondary pusher 22 comprises a motorised trolley 26, which extends below one of the members 8, and is movable along the member 8 in direction 4 under the thrust of a known and not shown operating device.

The trolley 26 supports a first horizontal slide 27, which is coupled in a sliding manner to the trolley 26 to move, with respect to the trolley 26 itself, in direction 7, and has connected to it a gripping member 28 for at least one panel 2.

The member 28 has an elongated shape substantially parallelepiped, extends in direction 4, and is defined by a gripper comprising a lower jaw 29 and an upper jaw 30 that are movable, one with respect to the other, between a clamping position and a release position of at least one panel 2.

The member 28 is associated with a first thrust member 31, which has an elongated shape, extends in direction 4, and comprises two thrust arms 32 arranged on opposite sides of the member 28 itself in direction 7.

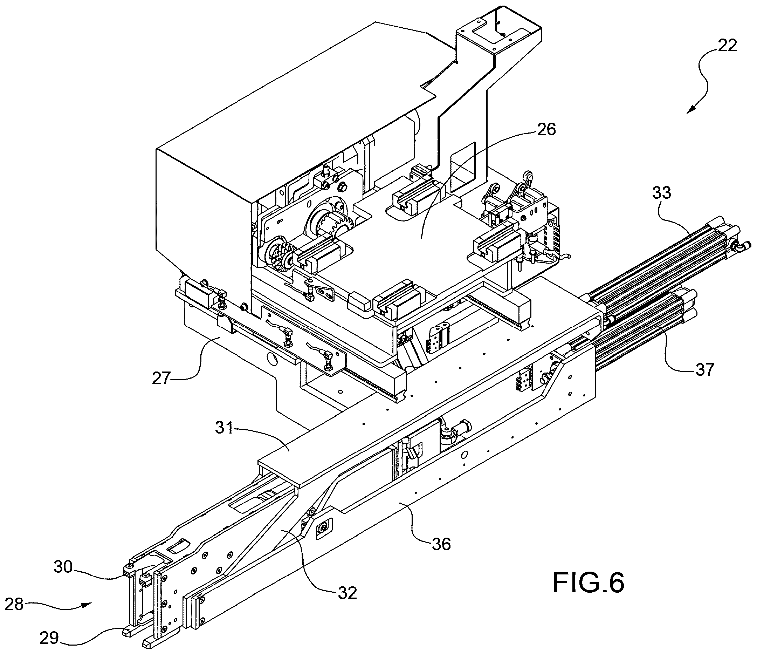

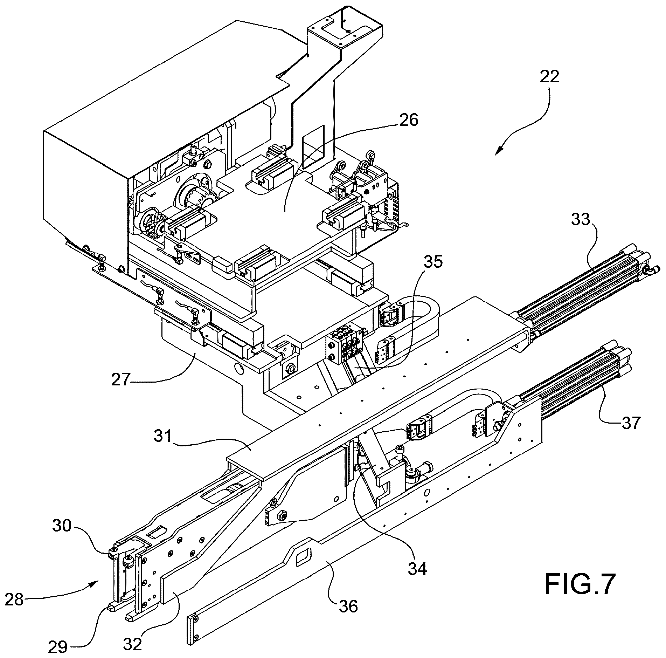

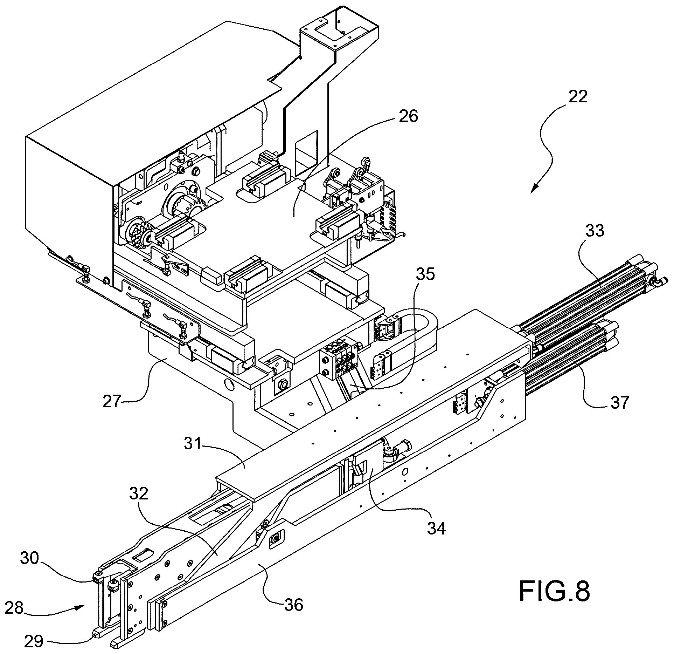

The member 31 is coupled in a sliding manner to the member 28 to move, with respect to the member 28 and under the thrust of an actuator cylinder 33, in direction 4 between a backward position (Figures 6 and 7), wherein the member 28 protrudes from the member 31 in direction 4, and an advanced position (Figure 8), wherein the arms 32 protrude from the member 28 in direction 4 itself to advance the components C, separated from the panels 2 by the blade 19, on the table 13 and/or to push the swarf in the trapdoor 14.

The pusher 22 also comprises a second horizontal slide 34, which is coupled in a sliding manner to the slide 27 to move, with respect to the slide 27 and under the thrust of an actuator cylinder 35, in an inclined direction of travel between directions 4 and 7.

The slide 34 supports a second thrust member 36, which has an elongated flat shape, extends in direction 4 parallel to the member 28, and is moved by the cylinder 35 between a rest position (Figures 6 and 8) and an operating position (Figure 7), wherein the member 36 moves away from the member 28 and cooperates with the member 28 itself to advance the panels 2 along the frame 3 in direction 4.

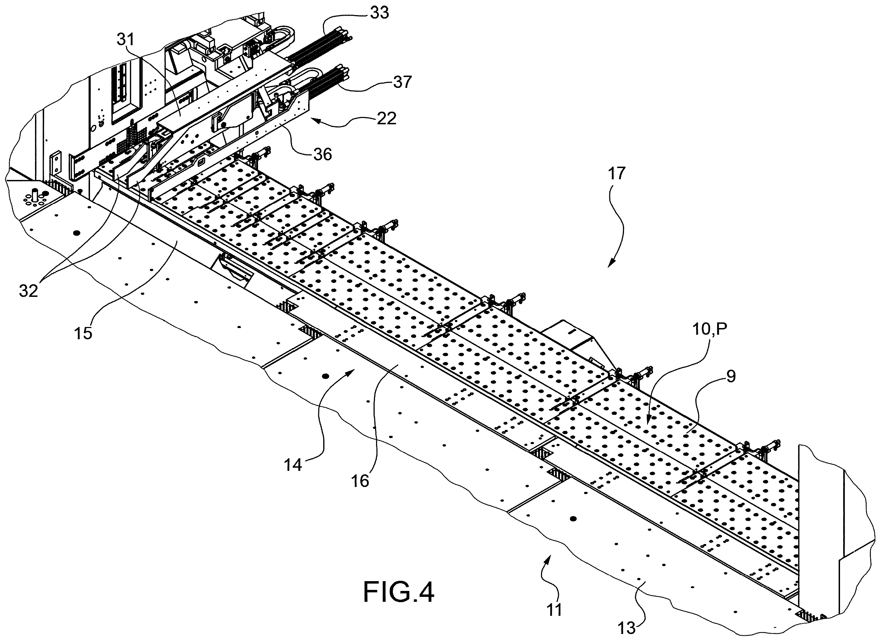

The member 36 is also coupled in a sliding manner to the slide 34 to move, with respect to the slide 34 and under the thrust of an actuator cylinder 37, in direction 4 between a backward position (Figures 6, 7, and 8), wherein the member 28 protrudes from the member 36 in direction 4, and an advanced position (Figure 4), wherein the member 36 protrudes from the member 28 in direction 4 and cooperates with the member 31 to advance components C, separated from panels 2 by the blade 19, on the table 11 and/or to push the swarf into the trapdoor 14.

With regard to the above, it should be noted that the plate 15 is substantially aligned with the secondary pusher 22 in direction 4 and the plate 16 is substantially aligned with the main pusher 21 in direction 4.

The table 13 is also provided with a first end-of-stroke device 38 comprising a plurality of pin members 39, which are aligned with each other in direction 4, and are movable between respective raised positions, wherein the members 39 protrude above the surface P, and respective lowered positions, wherein the members 39 are at most coplanar with the surface P itself.

When arranged in their raised positions, the members 39 allow a correct positioning of the panels 2 in direction 7.

The table 13 is also provided with a second end-of-stroke device 40 comprising a plurality of pin members 41, which are aligned with each other in a horizontal direction 42 inclined with respect to directions 4 and 7, and are movable between respective raised positions, wherein the members 41 protrude above the surface P, and respective lowered positions, wherein the members 41 are at most coplanar with the surface P itself.

When arranged in their raised positions, the members 41 allow a correct positioning of the panels 2 in a horizontal direction 43 that is transverse to direction 42.

The machine 1 is also provided with a robotic manipulator 44, which is arranged downstream of the table 13 in direction 4, and is configured to hold and move the components C separated from the panels 2 by the blade 19.

The machine 1 has some advantages mainly due to the fact that:
the two plates 15, 16 of the trapdoor 14 allow the cutting assembly 18 to cut the panel 2 retained by the main pusher 21 even when the plate 15 is arranged in its opening position for discharging the swarf of the panel 2, retained by the secondary pusher 22, below the surface P and to cut the panel 2 retained by the secondary pusher 22 even when the plate 16 is arranged in its opening position for discharging the swarf of the panel 2 retained by the main pusher 21 below the surface P;
the thrust members 31, 36 linked to the gripping member 28 allow the components C separated by the blade 19 from the panel 2 held by the secondary pusher 22 to be advanced on the table 13 and/or to discharge the swarf of the panel 2 retained by the secondary pusher 22 into the trapdoor 14, thus avoiding the use of the thrust bars 25 and, therefore, of the main pusher 21; and
the end-of-stroke device 40 allows the manipulator 44 to first correctly position at least two components C against the pin members 41 in direction 43 and, then, to correctly feed the two components C to the gripping members 24 of the main pusher 21 and to the gripping member 28 of the secondary pusher 22 parallel to direction 4 and/or to correctly position only one component C against the pin members 41 when the working area of the pusher 21 is occupied and prevents the positioning of the component C against the pin members 39.

## Claims

1. - A cutting machine to cut panels (2) made of wood or the like, the machine comprising a cutting station (17); a main pusher (21) to move at least one first panel (2) through the cutting station (17) in a first direction (4); a secondary pusher (22) to move at least one second panel (2) through the cutting station (17) in the first direction (4); a cutting assembly (18), which is mounted in the cutting station (17) and is movable in a second direction (7) and along a cutting surface (T), which are substantially perpendicular to the first direction (4), so as to cut the panels (2); and a support frame (3), which defines a support surface (P) for said first and second panel (2) and is provided with a discharge trapdoor (14), which is mounted downstream of the cutting surface (T) so as to discharge swarf under the support surface (P) and extends parallel to the cutting surface (T) in the second direction (7); and being **characterized in that** the discharge trapdoor (14) comprises at least two support plates (15, 16), which are aligned with one another in the second direction (7) and are movable independently of one another between respective closing positions, in which the support plates (15, 16) are coplanar to the support surface (P), and respective opening positions, in which the swarf is discharged under the support surface (P) ; wherein a first support plate (16) faces the main pusher (21) in the first direction (4) and a second support plate (15) faces the secondary pusher (22) in the first direction (4); the first support plate (16) having a length, measured parallel to the second direction (7), which is greater than a length of the second support plate (15), which is also measured parallel to the second direction (7).

2. - A cutting machine according to claim 1 and further comprising two longitudinal guide members (8), which are parallel to the first direction (4); the main pusher (21) extending between the two longitudinal guide members (8) and being coupled to the two longitudinal guide members (8) in a sliding manner.

3. - A cutting machine according to claim 2, wherein the secondary pusher (22) is coupled to one of the longitudinal guide members (8) in a sliding manner.

4. - A cutting machine according to any one of the preceding claims, wherein the cutting station (17) is provided with two vertical uprights (5), which delimit a work area of the main pusher (21) in the second direction (7); the discharge trapdoor (14) extending between the two vertical uprights (5).

5. - A cutting machine according to any one of the preceding claims, wherein each support plate (15, 16) is movable between relative opening and closing positions due to the thrust of a relative operating device.

## Patentansprüche

1. Schneidmaschine zum Schneiden von Platten (2) aus Holz oder dergleichen, umfassend eine Schneidstation (17); einen Hauptschieber (21) zum Bewegen wenigstens einer ersten Platte (2) durch die Schneidstation (17) in eine erste Richtung (4); einen Sekundärschieber (22) zum Bewegen wenigstens einer zweiten Platte (2) durch die Schneidstation (17) in die erste Richtung (4); eine Schneideinrichtung (18), welche in der Schneidstation (17) verbaut ist und in einer zweiten Richtung (7) und entlang einer Schneidfläche (T) bewegbar ist, welche im Wesentlichen senkrecht zur ersten Richtung (4) sind, um die Platten (2) zu schneiden; und ein Stützrahmen (3), welcher eine Stützfläche (P) für besagte erste und zweite Platten (2) definiert und mit einer Ausstoßfalltür (14) ausgestattet ist, welche stromab der Schneidfläche (T) verbaut ist, sodass Späne unter der Stützfläche (P) ausgeworfen werden und welche sich parallel zur Schneidfläche (T) in die zweite Richtung (7) erstreckt;
**dadurch gekennzeichnet, dass**
die Ausstoßfalltür (14) wenigstens zwei Stützplatten (15, 16) umfasst, welche in der zweiten Richtung (7) zueinander ausgerichtet sind und unabhängig voneinander zwischen respektiver Schließstellungen, in welcher die Stützplatten (15, 16) koplanar zur Stützfläche (P) sind, und respektiver Öffnungsstellungen, in welcher die Späne unter der Stützfläche (P) ausgeworfen werden, bewegbar sind; wobei eine erste Stützplatte (16) dem Hauptschieber (21) in die erste Richtung (4) zugewandt ist und eine zweite Stützplatte (15) dem Sekundärschieber (22) in die erste Richtung (4) zugewandt ist; die erste Stützplatte (16) aufweisend eine parallel zur zweiten Richtung (7) gemessene Länge welche größer ist, als eine ebenfalls parallel zur zweiten Richtung (7) gemessene Länge der zweiten Stützplatte (15).

2. Schneidmaschine nach Anspruch 1, ferner umfassend zwei Längsführungselemente (8), welche parallel zur ersten Richtung (4) sind; der Hauptschieber (21) erstreckend zwischen den beiden Längsführungselementen (8) und mit den beiden Längsführungselementen (8) in gleitender Art und Weise gekoppelt.

3. Schneidmaschine nach Anspruch 2, wobei der Sekundärschieber (22) in gleitender Art und Weise mit einem der Längsführungselemente (8) gekoppelt ist.

4. Schneidmaschine nach einem der vorhergehenden Ansprüche, wobei die Schneidstation (17) mit zwei vertikalen Stützen (5) versehen ist, welche einen Arbeitsbereich des Hauptschiebers (21) in die zweite Richtung (7) begrenzen; die Ausstoßfalltür (14) erstreckend zwischen den beiden vertikalen Stützen (5).

5. Schneidmaschine nach einem der vorhergehenden Ansprüche, wobei jede Stützplatte (15, 16) aufgrund der Schubkraft einer relativen Betätigungseinrichtung zwischen entsprechenden Öffnungsstellungen und Schließstellungen bewegbar ist.

## Revendications

1. Machine de découpe pour découper des panneaux (2) composés de bois ou analogue, la machine comprenant un poste de découpe (17) ; un poussoir principal (21) pour déplacer au moins un premier panneau (2) à travers le poste de découpe (17) dans une première direction (4) ; un poussoir secondaire (22) pour pousser au moins un second panneau (2) à travers le poste de découpe (17) dans la première direction (4) ; un ensemble de découpe (18), qui est monté dans le poste de découpe (17) et est mobile dans une seconde direction (7) et le long d'une surface de découpe (T), qui sont sensiblement perpendiculaires à la première direction (4), de manière à découper les panneaux (2) ; et un cadre de support (3), qui définit une surface de support (P) pour lesdits premier et second panneaux (2) et est pourvu d'une trappe d'évacuation (14), qui est montée en aval de la surface de découpe (T) de manière à évacuer les copeaux sous la surface de support (P) et s'étend parallèlement à la surface de découpe (T) dans la seconde direction (7) ; et étant **caractérisée en ce que** la trappe d'évacuation (14) comprend au moins deux plaques de support (15, 16), qui sont alignées l'une sur l'autre dans la seconde direction (7) et sont mobiles indépendamment l'une de l'autre entre des positions de fermeture respectives, dans lesquelles les plaques de support (15, 16) sont coplanaires à la surface de support (P), et des positions d'ouverture respectives, dans lesquelles les copeaux sont évacués sous la surface de support (P) ; dans laquelle une première plaque de support (16) fait face au poussoir principal (21) dans la première direction (4) et une seconde plaque de support (15) fait face au poussoir secondaire (22) dans la première direction (4) ; la première plaque de support (16) présentant une longueur, mesurée parallèlement à la seconde direction (7), qui est supérieure à une longueur de la seconde plaque de support (15), qui est également mesurée parallèlement à la seconde direction (7).

2. Machine de découpe selon la revendication 1 et comprenant en outre deux éléments de guidage longitudinaux (8), qui sont parallèles à la première direction (4) ; le poussoir principal (21) s'étendant entre les deux éléments de guidage longitudinaux (8) et étant accouplé aux deux éléments de guidage longitudinaux (8) d'une manière coulissante.

3. Machine de découpe selon la revendication 2, dans laquelle le poussoir secondaire (22) est accouplé à l'un des éléments de guidage longitudinaux (8) d'une manière coulissante.

4. Machine de découpe selon l'une quelconque des revendications précédentes, dans laquelle le poste de découpe (17) est pourvu de deux montants verticaux (5), qui délimitent une zone de travail du poussoir principal (21) dans la seconde direction (7) ; la trappe d'évacuation (14) s'étendant entre les deux montants verticaux (5).

5. Machine de découpe selon l'une quelconque des revendications précédentes, dans laquelle chaque plaque de support (15, 16) est mobile entre des positions d'ouverture et de fermeture relatives en raison de la poussée d'un dispositif d'actionnement relatif.
